# EUROPEAN PATENT APPLICATION

(11) **EP 1 000 778 A2**
(43) Date of publication of application: **17.05.2000**
(21) Application number: 99121977.5
(22) Date of filing: 10.11.1999
(51) Int. Cl.: B60F 3/00

(54) **Amphibious vehicle with articulated sections**

(30) Priority: 13.11.1998 IT TO980957
(71) Applicant: A.R.I.S. S.p.A., 10040 Lombardore, Turin (IT)
(72) Inventor: Bellezza Quater, Giorgio, 10040 Lombardore (Prov. of Torino) (IT); Bellezza Quater, Silvia, 10077 S. Maurizio Canavese (Torino) (IT); Bellezza Quater, Paolo, 10077 S. Maurizio Canavese (Torino) (IT)
(74) Representative: Modiano, Guido, Dr.-Ing.

(57) **Abstract**

An amphibious vehicle (10) comprising vehicle sections (11-12) which can travel on land and on water, one section being arranged behind the other, the sections being mutually articulated by means of an active articulation (19); the sections (11-12) being provided with corresponding bow and stern auxiliary hydraulic propulsion and steering units (23, 24) which comprise respective power plants connected to corresponding pairs of propellers (36-37) which can be actuated simultaneously or selectively and are accommodated in corresponding watertight enclosures (38-39) which also act as auxiliary flotation elements; each auxiliary unit (23-24) being associated with a respective pair of rails (41-42) which is supported by the corresponding vehicle section (11-12) and allows the translatory motion of the auxiliary unit from an immersed active position to an inactive position above the waterline and viceversa.

## Description

The present invention relates to an amphibious vehicle with articulated sections, of the so-called double-hull type, and more specifically to an amphibious vehicle of the type that comprises two sections which can travel on land and in the water, one section being arranged behind the other in a general tractor/trailer configuration, both sections being however provided with respective means of propulsion, and wherein the sections are mutually articulated by means of an active articulation device which is capable of varying, at the driver's command, the orientation of one section with respect to the other in order to allow the vehicle to steer both during ground travel and during navigation.

Amphibious vehicles with articulated sections are known in which propulsion of the vehicle during navigation is entrusted exclusively to the same means provided for ground propulsion, i.e., tracks and/or tire-fitted wheels.

It is known that these means of propulsion have a very low hydrodynamic efficiency; accordingly, during navigation such vehicles move at a correspondingly low speed and are also scarcely maneuverable, and this is a severe drawback which significantly limits the use of those conventional vehicles, which are otherwise very useful and are appreciated owing to their high carrying capabilities, their constructive simplicity and in general their versatility in use.

The aim of the present invention is to eliminate this severe drawback, and within the scope of this general aim an object of the invention is to provide an amphibious vehicle with articulated sections of the specified type which is considerably improved in terms of navigation characteristics both by virtue of a significant increase in cruising speed and by virtue of significantly easier maneuvering and steering during navigation.

Another object of the present invention is to provide an amphibious vehicle with articulated sections which is improved as regards navigation as specified above and which however keeps its general structure substantially unchanged, allowing the improved navigation functionality by using auxiliary elements which do not require significant variations or modifications of its general structure.

This aim, this object and others which will become apparent from the detailed description that follows are achieved according to the present invention with an amphibious vehicle with articulated sections, having the specific characteristics stated in the appended claims.

Substantially, the invention is based on the concept of providing the vehicle sections with corresponding auxiliary hydrodynamic bow and stem units for propulsion and steering, respectively, each of which comprises at least one power plant which is operatively connected to at least two propellers which can be actuated simultaneously or selectively and is accommodated in a corresponding watertight enclosure which also acts as an auxiliary flotation element; said enclosure being slidingly coupled to two guiding and sliding rails which, starting substantially from the waterline of the vehicle section, run above said section in order to allow to move the auxiliary unit, by means of a movement device, from an immersed active position to an inactive or non-use position above the waterline and viceversa.

Further characteristics and advantages of the amphibious vehicle according to the present invention will become apparent from the following detailed description and with reference to the accompanying drawings, which are given by way of non-limitative example and wherein:
Figure 1 is a general side elevation view of an amphibious vehicle according to the present invention;

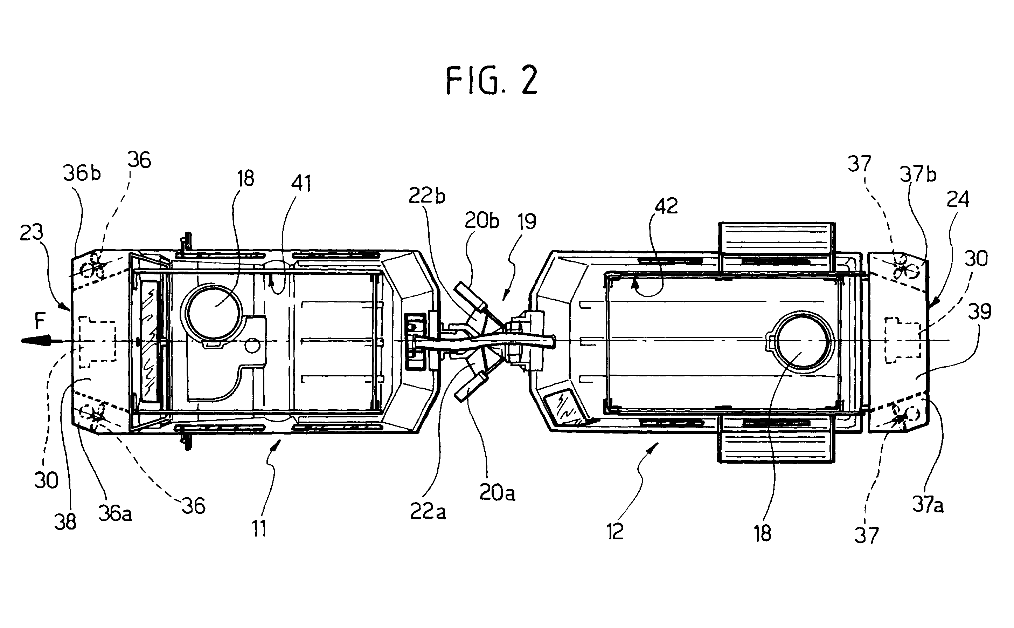

Figure 2 is a top plan view of Figure 1;
Figure 3 is an enlarged-scale detail view, taken along the plane III-III of Figure 1, of the auxiliary bow or stern unit;
Figure 4 is an enlarged-scale view of a detail of a device for moving the auxiliary unit.

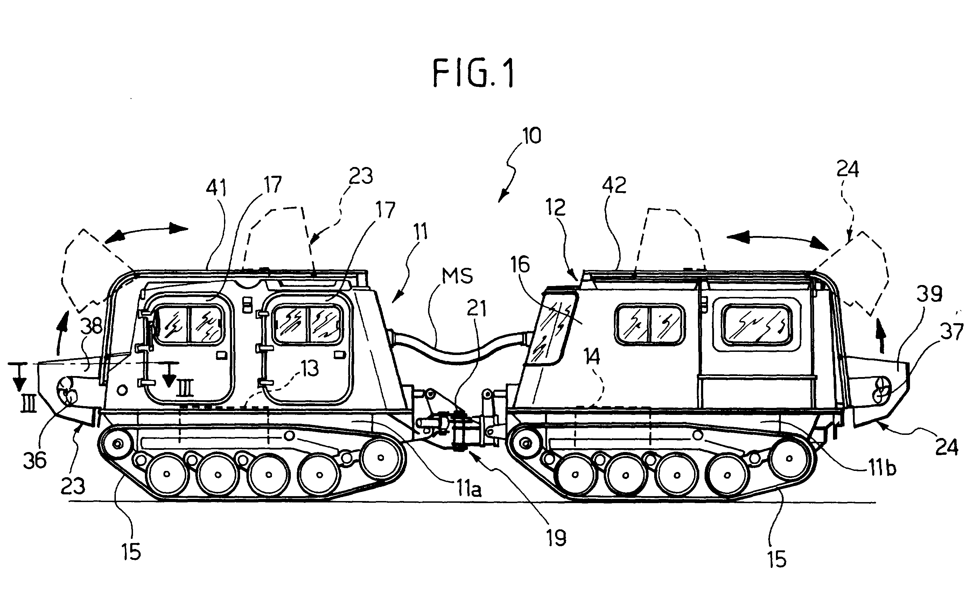

In Figure 1, the reference numeral 10 generally designates the amphibious vehicle according to the invention, which is substantially constituted by a first vehicle section 11 and by a second vehicle section 12 which can move on land and can float. Such sections are arranged one behind the other according to a general tractor/trailer configuration and are interconnected by means of a service duct MS of hermetic type which accommodates electrical cables, hoses for compressed air and/or hydraulic fluid, etcetera.

Each vehicle section 11-12 is constituted by a watertight hull 11a-12a which is provided with a respective power plant 13-14 for actuating land propulsion means, such as tracks 15 and/or tire-fitted wheels (not shown) and is provided with a watertight body with watertight lateral and upper access doors 17 and 18. The two vehicle sections 11 and 12 are mutually articulated by means of an active articulation device 19 which is capable of varying, under the driver's control, the orientation of one section with respect to the other so as to allow the vehicle 10 to steer both during land travel and during navigation.

For this purpose, the device 19 has, in a per se known manner, two fluid-actuated jacks 20a and 20b which are arranged in a converging configuration on either side of an articulation pivot 21 and whose respective cylinders are rigidly coupled to supporting lugs 22a and 22b which are rigidly coupled to the first section 11 and whose corresponding stems are articulated to a plate supported by the second section 12.

According to the present invention, the two sections 11 and 12 have corresponding auxiliary units for hydrodynamic propulsion and steering, respectively a bow unit 23 and a stern unit 24.

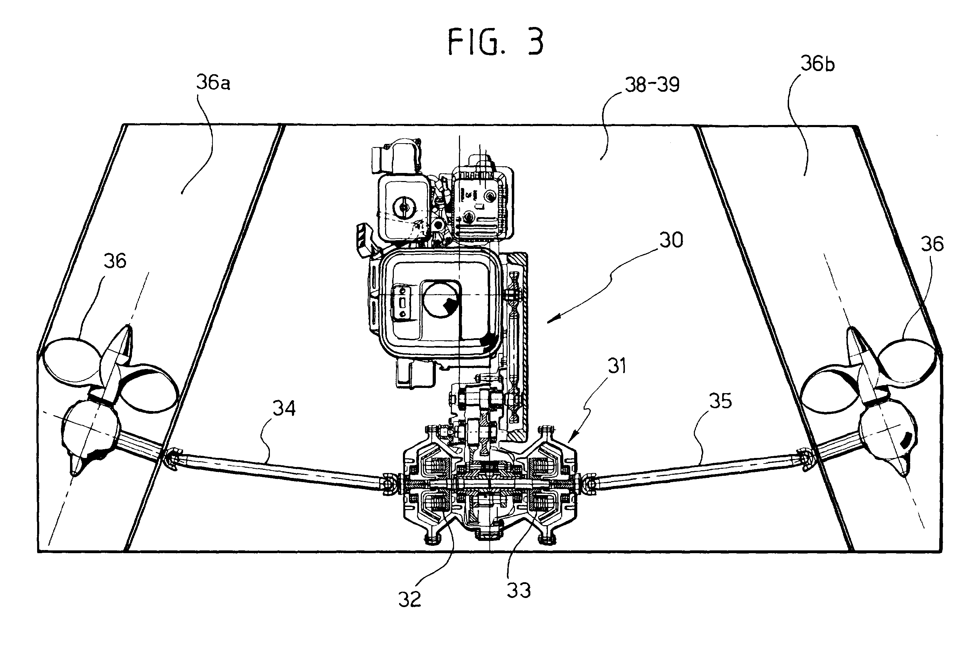

Each auxiliary unit 23-24 comprises (Figure 3) a power plant 30 which, by means of a transmission box 31 which includes two clutch couplings 32-33 and respective shaft halves 34-35 provided with universal joints, drives a corresponding pair of propellers, respectively a bow propeller 36 and a stern propeller 37, of the ducted type. The propellers 36 are preferably contained in respective ducts 36a and 36b whose axes diverge with respect to the direction of the flow generated by them in order to produce the advancement of the vehicle in the direction of the arrow F in the figure; the propellers 37 are instead contained in respective ducts 37a and 37b which converge with respect to said direction of the flow.

The power plants 30 and the respective transmission boxes 31 of the units 23-24 are contained in respective watertight enclosures 38-39 which are an integral part of said sections 23-24 and also act as auxiliary flotation elements.

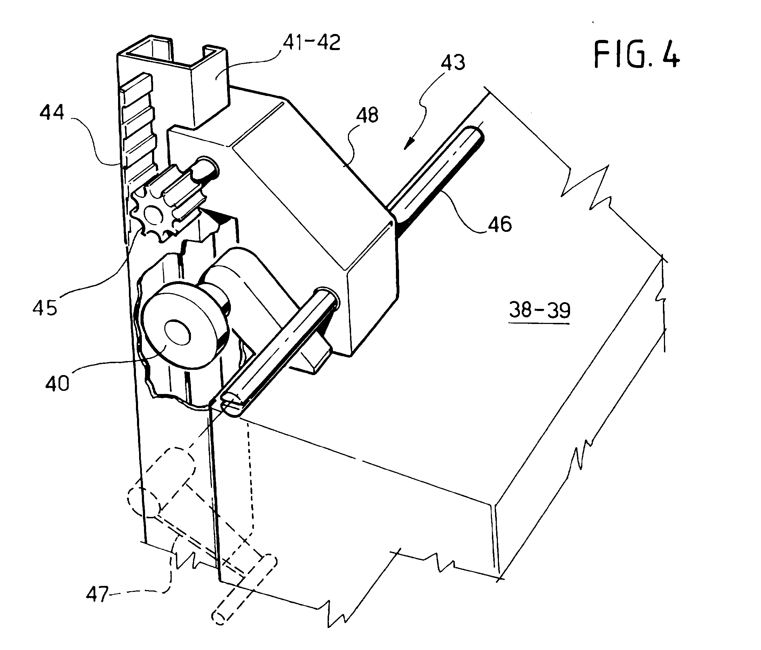

As clearly shown in the figures, each enclosure 38-39, with the respective power plant 30 and the respective pair of propellers 36-37, is coupled so that it can slide, for example by means of rollers 40 (Figure 4), to corresponding pairs of sliding and guiding rails 41-42 which are associated with each vehicle section 11-12.

Each pair of rails 41-42 substantially starts from the waterline -- or slightly above it -- and curves above the roof of the corresponding vehicle section 11-12 in order to allow to move the corresponding auxiliary unit 23 or 24 from an immersed active position, shown in solid lines, to an inactive position above the waterline, shown in dashed lines and located above said vehicle section, and viceversa.

A movement device, for example of the rack-and-pinion type, generally designated by the reference numeral 43 (Figure 4), is provided on each vehicle section in order to perform said translatory motion of the associated auxiliary unit.

Preferably, the movement device 43 is of a manual type and comprises racks 44 arranged to the side of the guiding and sliding rails 41-42 and pinions 45 which mesh with said racks. The pinions are actuated manually by means of a transmission shaft 46 which is driven by a crank 47 and with reduction units 48 interposed at the two ends of the corresponding enclosure 38 or 39.

In the immersed active position, each auxiliary unit supplies an auxiliary flotation thrust which is adapted to at least compensate for the displacement of said unit as a whole, i.e., of the assembly constituted by the enclosure, the engine, the transmission and the propellers, but is preferably greater than said displacement and suitable to contribute to improve the seaworthiness characteristics of the entire vehicle.

The presence of the clutch couplings 32-33 in the transmission box 31 allows to actuate the bow and/or stern propellers 36-37 simultaneously or individually, to the benefit of the maneuverability of the vehicle as a watercraft; moreover, the auxiliary units 23-24 can be actuated and immersed simultaneously or separately according to operating requirements.

Without altering the concept of the invention, the details of execution and the embodiments, particularly of the propulsion system, may of course be altered extensively with respect to what has been described and illustrated by way of non-limitative example without thereby abandoning the scope of the invention.

The disclosures in Italian Patent Application No. TO98A000957 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An amphibious vehicle (10) comprising vehicle sections (11-12) which can travel on land and on water, one section being arranged behind the other, said sections being mutually articulated by means of an active articulation (19), characterized in that said vehicle sections (11-12) are provided with corresponding bow and stern auxiliary hydraulic propulsion and steering units (23, 24) which comprise respective power plants (30) which are connected to corresponding pairs of propellers (36-37) which can be actuated simultaneously or selectively and are accommodated in corresponding watertight enclosures (38-39) which also act as auxiliary flotation elements; each auxiliary propulsion and steering unit (23-24) being associated with a respective pair of rails (41-42) which is supported by the corresponding vehicle section (11-12) and allows a translatory motion of said auxiliary propulsion and steering unit from an immersed active position to an inactive position above the waterline and viceversa.

2. The amphibious vehicle according to claim 1, characterized in that each power plant (30) is operatively connected to a transmission box (31) which comprises two clutch couplings (32-33) which turn respective shaft halves (34-35) which are provided with universal joints and actuate the corresponding pair of bow (36) or stern (37) propellers.

3. The amphibious vehicle according to claim 2, characterized in that the pairs of bow (36) and stern (37) propellers are of the ducted type, and in that the ducts (36a-36b) for containing the bow propellers have axes which diverge with respect to the direction of the flow generated by them in order to produce the advancement of the vehicle (10) and the ducts (37a-37b) of the stern propellers have converging axes.

4. The amphibious vehicle according to claim 3, characterized in that said auxiliary propulsion and steering units (23-24) supply, by means of said respective watertight enclosures (38-39), an auxiliary flotation thrust which is adapted at least to compensate for the displacement of said units.

5. The amphibious vehicle according to claim 4, characterized in that said flotation thrust is greater than said displacement and contributes to improve the flotation of the entire vehicle (10).

6. The amphibious vehicle according to claim 1, characterized in that each pair (41-42) of rails for the guiding and sliding of the auxiliary propulsion and steering units (23-24) runs substantially from the waterline to the roof of the associated vehicle section, and in that in the position above the waterline each auxiliary propulsion and steering unit (23-24) is arranged above said vehicle section.

7. The amphibious vehicle according to claim 1, characterized in that it comprises movement devices (43) for the translatory motion of the auxiliary propulsion and steering units (23-24) from the immersed position to the position above the waterline and viceversa.

8. The amphibious vehicle according to claim 7, characterized in that said movement means comprise racks (44) which are arranged to the side of the guiding and sliding rails (41-42) and pinions (45) which mesh with said racks; said pinions being actuated manually by means of a transmission shaft (46) which is driven by a crank (47) and with reduction units (48) interposed, said reduction units being located at the two ends of the respective watertight enclosure (38-39).
